Europäisches Patentamt

European Patent Office

Office européen des brevets

(19)

(11) Veröffentlichungsnummer : **0 096 652**
**B1**

(12) # EUROPÄISCHE PATENTSCHRIFT

(45) Veröffentlichungstag der Patentschrift :
19.10.88

(21) Anmeldenummer : 83730053.2

(22) Anmeldetag : 31.05.83

(51) Int. Cl.⁴ : **H 02 B   1/12**

(54) Schlagwettergeschützte Schaltanlage mit einem Sammelschienenkanal.

(30) Priorität : 08.06.82 DE 3221900

(43) Veröffentlichungstag der Anmeldung :
21.12.83 Patentblatt 83/51

(45) Bekanntmachung des Hinweises auf die Patenterteilung : 19.10.88 Patentblatt 88/42

(84) Benannte Vertragsstaaten :
FR GB

(56) Entgegenhaltungen :
BE-A-   513 244
DE-A- 2 937 671
DE-C-   638 019
FR-A- 1 119 671
FR-A- 1 167 635
GB-A- 1 171 355

(73) Patentinhaber : Siemens Aktiengesellschaft Berlin
und München
Wittelsbacherplatz 2
D-8000 München 2 (DE)

(72) Erfinder : Polierspöck, Kurt
Schuckertdamm 328
D-1000 Berlin 13 (DE)

## Beschreibung

Die Erfindung betrifft eine elektrische Anlage in schlagwettergeschützter Ausführung mit einer Einspeisevorrichtung und in Gehäusen der Schutzart « druckfeste Kapselung » (Sch) d untergebrachten Geräten, sowie mit einer zwischen jedem druckfesten Gehäuse und der Einspeisevorrichtung angeordneten schlagwettergeschützten Steckverbindung und mit je einer Schraube zur Verbindung und zur Verriegelung der Gehäuse mit der Einspeisevorrichtung, wobei die Schrauben gegenüber den Kontaktelementen der Steckverbindung bei der Verbindung der Gehäuse mit der Einspeisevorrichtung voreilend und bei ihrer Trennung nacheilend wirken, und wobei ferner die Dosenteile an der Einspeisevorrichtung und die Steckerteile an den druckfesten Gehäusen angeordnet sind.

Eine Anlage dieser Art ist durch die BE-A-513 244 bekannt geworden. Sie dient zum Ansetzen von Grubenleuchten an ein Versorgungskabel, das hierzu mit steckdosenartigen Verbindungsmuffen versehen ist. Eine als Verbindungs- und Verriegelungselement dienende Schraube durchsetzt die Verbindungsmuffe von der Rückseite her und greift in den Steckerteil der Grubenleuchte ein. In der genannten Druckschrift ist zwar eine Eignung dieser Anordnung auch für andere Arten schlagwettergeschützter Geräte angegeben, jedoch ist offensichtlich, daß sich diese Anregung nur auf etwa gleichgroße Apparate beziehen kann und nicht darauf abzielt, einer Versorgungseinrichtung mit verteilt angeordneten Verbrauchern in eine kompakte Schaltanlage umzuwandeln.

Der Erfindung liegt hiervon ausgehend die Aufgabe zugrunde, die Möglichkeit des Anfügens oder des Austausches von schlagwettergeschützten Geräten auch auch für Schaltanlagen nutzbar zu machen, die bisher als unveränderliche Gerätekombinationen mit relativ großen Abmessungen und großem Gewicht ausgebildet sind. Es sind zwar auch Schaltanlagen in schlagwettergeschützter Bauart bekannt (FR-A-1 167 635), die aus Einzelgehäusen und einem Sammelschienenkanal zusammengesetzt sind, die jedoch betriebsmäßig nicht zerlegbar sind und somit nicht die angestrebte Flexibilität bei der Gerätebestückung gestatten.

Die genannte Aufgabe wird gemäß der Erfindung dadurch gelöst, daß die Einspeisevorrichtung als Sammelschienenkanal mit Dosenteilen ausgebildet ist, deren Anzahl gleich ist der zur Bildung einer Schaltanlage benötigten druckfesten Gehäuse, daß an der Einspeisevorrichtung in der Nähe von jedem Dosenteil der Steckverbindungen eine Gewindebuchse für die an jedem druckfesten Gehäuse angebrachte Schraube sowie ein mit der Schraube zusammenwirkender Endschalter angeordnet ist und daß an der Einspeisevorrichtung eine Einrichtung zur Abstützung der druckfesten Gehäuse beim Ansetzen an den Sammelschienenkanal bzw. bei der Abnahme von demselben vorgesehen ist.

Die Trennung der Schraube von der Steckverbindung erleichtert es, die Steckverbindung an die gegenüber einer Anschlußvorrichtung für Grubenleuchten oder ähnlichen Geräte wesentlich erhöhten Anforderungen anzupassen. Dennoch werden die Einfahrkräfte der Steckverbindung praktisch allein von dieser Schraube aufgebracht. Ihre Stellung ist somit maßgebend für den jeweiligen Betätigungszustand der Steckverbindung. Somit zeigt der der Gewindebuchse zugeordnete Endschalter zuverlässig an, ob sich die Steckverbindung im geöffneten oder geschlossenen Zustand befindet und kann daher in einen Steuerstromkreis eingezogen werden, der die betreffende Verbindung oder die gesamte Schaltanlage spannungsfrei macht, oder wenigstens den Laststrom abschaltet. Durch die Einrichtung zur Abstützung des druckfesten Gehäuses ist der Benutzer der Schaltanlage von dem Gewicht des druckfesten Gehäuses entlastet. Da sich die zur Verriegelung und Verbindung dienende Schraube gleichfalls an dem druckfesten Gehäuse befindet, finden das Ansetzen des druckfesten Gehäuses an den Sammelschienenkanal und die Bedienung der Schraube an derselben Seite der Schaltanlage statt.

An dem Sammelschienenkanal kann in der Nähe von jedem Dosenteil der Steckverbindung eine Schutzklappe gelenkig befestigt sein, die in ihrer Ruhestellung den Dosenteil freigibt und in ihrer Arbeitsstellung den Dosenteil abdeckt und die ferner eine Durchtrittsöffnung für eine in der Arbeitsstellung der Schutzklappe mit der Gewindebuchse und dem Endschalter zusammenwirkende Schraube besitzt. Diese Einrichtung ermöglicht einen Betrieb der Schaltanlage bei nur teilweiser Bestückung mit (Sch)d-Gehäusen. Wird nämlich ein solches Gehäuse abgenommen, so ist zunächst die Anlage spannungslos, weil der zugehörige Endschalter geöffnet wird. Durch Umlegen der Schutzklappe und Eindrehen einer Schraube in die Gewindebuchse wird zum einen der Dosenteil der Steckverbindung gegenüber der Umgebung abgedichtet. Durch entsprechende Gestaltung der Teile ist dabei die Schutzart IP 54 zu erreichen. Andererseits wird der Endschalter wieder geschlossen und damit die Anlage unter Spannung gesetzt.

Die Erfindung wird im folgenden anhand des in den Figuren dargestellten Ausführungsbeispieles näher erläutert.

Die Fig. 1 zeigt in einer perspektivischen Darstellung einen Abschnitt eines Sammelschienenkanals mit zwei daran befestigten druckfesten Gehäusen und einem hiervon getrennten Gehäuse.

In der Fig. 2 ist der Sammelschienenkanal im Schnitt und ein druckfestes Gehäuse in der Seitenansicht gezeigt.

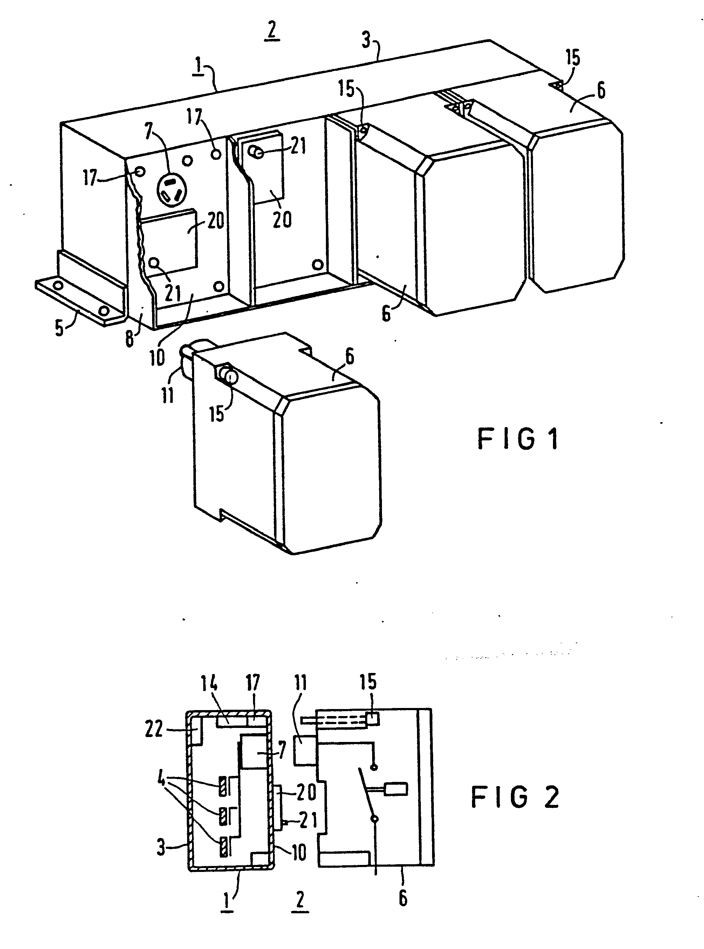

Der in der Fig. 1 gezeigte Sammelschienenkanal 1 der als Ganzes mit 2 bezeichneten schlagwettergeschützten Schaltanlage weist ein Gehäuse 3 mit rechteckigem Querschnitt auf, in dem übereinander drei Sammelschienenleiter 4 isoliert abgestützt sind (Fig. 2). Der Abschluß des Sammelschienenkanals kann durch ein gesondertes Anschlußgehäuse für die einspeisenden Kabel gebildet sein oder es kann bei anderweitiger Einspeisung in die Sammelschienenleiter 4 ein Verschlußdeckel vorhanden sein. Der Sammelschienenkanal 1 ist in der Schutzart « erhöhte Sicherheit » (Sch)e ausgeführt, bei der betriebsmäßig keine zündfähigen Funken auftreten dürfen. Das Gehäuse 3 kann infolgedessen gegenüber einer druckfesten Kapselung vergleichsweise leicht ausgeführt werden. Zur Aufstellung auf dem Liegenden sind Befestigungswinkel 5 vorgesehen. Stattdessen kann der Sammelschienenkanal 1· an einem Gerüst oder Gestell befestigt sein. Ein vorgesetzter Rahmen 8 dient zum Einführen der (Sch)d-Gehäuse 6.

Die zu der Schaltanlage 2 gehörenden Schaltgeräte sind in mehreren Gehäusen der Schutzart « druckfeste Kapselung » (Sch)d untergebracht. Zwei dieser Gehäuse 6 sind in einer Stellung gezeigt, die sie im Betrieb einnehmen und in der sie an dem Sammelschienenkanal 1 angesetzt sind. Ein weiteres druckfestes Gehäuse 6 ist in einer abgenommenen Stellung dargestellt, um die zusammenwirkenden Teile einer Steckverbindung zu zeigen. Diese besteht aus einem Dosenteil 7, der an der Frontseite 10 des Gehäuses 3 angeordnet ist, und einem Steckerteil 11, der sich an der der Frontfläche 10 zugewandten Seite der druckfesten Gehäuse 6 befindet. In dem dargestellten Beispiel sind die Steckverbindungen dreipolig ausgeführt, d. h. die den Phasen des Drehstromsystems zugeordneten Kontaktelemente und ein Schutzleiterkontakt sind in dem Dosenteil 7 und dem Steckerteil 11 jeweils zusammengefaßt. Zusätzlich können Dosen- und Steckerteil weitere Kontaktelemente für Steuerleitungen enthalten. Darüber hinaus können die Steckverbindungen als Einzelkontaktverbindungen ausgebildet sein. Um sicher zu stellen, daß beim Ansetzen eines druckfesten Gehäuses 6 an den Sammelschienenkanal 1 der Steuerstromkreis der Schaltgeräte oder eines vorgeordneten Schutzschalters erst dann geschlossen ist, wenn die aus dem Dosenteil 7 und dem Steckerteil 11 bestehende Starkstromsteckverbindung einwandfrei geschlossen ist, ist ein gesonderter Endschalter 14 vorgesehen, der mechanisch bei der Verbindung eines druckfesten Gehäuses 6 mit dem Sammelschienenkanal 1 betätigt wird (Fig. 2).

Jedes der druckfesten Gehäuse 6 ist mit vier Schrauben 15 versehen, die in der Nähe der Gehäuseecken angeordnet sind. Die Schrauben 15 wirken mit entsprechenden Gewindebuchsen 17 zusammen, die an der Frontseite 10 des Sammelschienenkanals 1 angeordnet sind. Die Länge und die Lagerung wenigstens einer der Schrauben 15 ist so bemessen, daß auf jeden Fall eine mechanisch tragfähige Verbindung hergestellt ist, bevor die Kontaktelemente der Starkstromsteckverbindung miteinander in Eingriff gelangen. Zweckmäßig wird in dieser Weise die dem Steckerteil 11 nächstliegende Schraube ausgeführt. Durch die Nähe wird erreicht, daß die Einfahrkräfte praktisch von dieser Schraube allein aufgebracht werden; während die übrigen Schrauben reinen Befestigungszwecken dienen.

Die Steckverbindung ist dabei so ausgeführt, daß sie ihrerseits einen den Vorschriften über die Schutzart « druckfeste Kapselung » entsprechenden Raum bildet, bevor die Kontaktelemente einander berühren. Sollte also ein explosionsfähiges Gemisch beim Ansetzen eines druckfesten Gehäuses 6 an den Sammelschienenkanal 1 gezündet werden, so wird ein Zünddurchschlag verhindert, weil die Steckverbindung bereits eine druckfeste Kapselung mit einem Schutzspalt bildet und eine Trennung dieser Steckverbindung bzw. eine Öffnung des druckfesten Raumes der Steckverbindung durch die bereits durch die Schrauben 15 bewirkte mechanische Verbindung ausgeschlossen ist.

Statt des Rahmens 8 können auch andere Einrichtungen zur Unterstützung der druckfesten Gehäuse 6 vorgesehen werden, z. B. in Gestalt von Einfahrschienen, die sich von der Frontseite 10 des Sammelschienenkanals ausgehend nach vorn erstrecken.

Wesentlich für die neue Schaltanlage sind Schutzklappen 20, die jedem Dosenteil 7 der Steckverbindungen in gleicher Weise zugeordnet sind. Die Schutzklappen 20 sind jeweils unterhalb des Dosenteils 7 an der Frontseite 10 des Gehäuses 3 des Sammelschienenkanals 1 gelenkig befestigt und nehmen unter ihrem Eigengewicht die Stellung ein, wie sie in der Fig. 1 im Bereich des ersten Feldes von links des Sammelschienenkanals 1 gezeigt ist. Soll die Schaltanlage 2 auch dann in Betrieb genommen werden, wenn eines oder mehrere der (Sch)d-Gehäuse fehlen, so werden die freiwerdenden Dosenteile 7 durch Hochklappen der Schutzklappen 20 verschlossen und durch eine Schraube 21 in dieser Stellung gesichert. Diese erstreckt sich durch eine entsprechende Öffnung der Schutzklappe 20 und greift in gleicher Weise in die linke obere Gewindebuchse 17 ein wie eine entsprechende Schraube 15 eines der (Sch)d-Gehäuse. Somit wird auch der Endschalter 14 betätigt und die Anlage betriebsbereit gemacht. Eine Schutzklappe in dieser Arbeitsstellung ist bei dem zweiten Feld von links in Fig. 1 gezeigt.

Die Fig. 2 läßt zusätzlich zu den schon beschriebenen Einzelheiten noch einen Leitungskanal 22 erkennen, durch den die Steuerleitungen verlaufen.

In dem Ausführungsbeispiel gemäß der Fig. 1 ist der Sammelschienenkanal 1 für vier gleich große Gehäuse 6 bemessen. Eine Schaltanlage dieser Art läßt sich dadurch erweitern, daß ein gleicher Sammelschienenkanal an den dargestellten Sammelschienenkanal angesetzt und mit diesem verbunden wird, so daß dann eine entsprechend größere Anzahl druckfester Gehäuse verwendet werden kann. Andererseits sind Sammelschienenkanäle für eine größere oder kleinere Anzahl durckfester Gehäuse ebenso wie für anders bemessene Gehäuse verwendbar.

**Patentansprüche**

1. Elektrische Anlage (2) in schlagwettergeschützter Ausführung mit einer Einspeisevorrichtung (1) und in Gehäusen (6) der Schutzart « druckfeste Kapselung » (Sch)d untergebrachten Geräten sowie mit einer zwischen jedem druckfesten Gehäuse (6) und der Einspeisevorrichtung (1) angeordneten schlagwettergeschützten Steckverbindung (7 ; 11) und mit je einer Schraube (15) zur Verbindung und zur Verriegelung der Gehäuse (6) mit der Einspeisevorrichtung (1), wobei die Schrauben (15) gegenüber den Kontaktelementen der Steckverbindung (7 ; 11) bei der Verbindung der Gehäuse (6) mit der Einspeisevorrichtung (1) voreilend und bei ihrer Trennung nacheilend wirken, und wobei ferner die Dosenteile (7) an der Einspeisevorrichtung (1) und die Steckerteile (11) an den druckfesten Gehäusen (6) angeordnet sind, dadurch gekennzeichnet, daß die Einspeisevorrichtung als Sammelschienenkanal (1) mit Dosenteilen (7) ausgebildet ist, deren Anzahl gleich ist der zur Bildung einer Schaltanlage benötigten druckfesten Gehäuse (6), daß an der Einspeisevorrichtung in der Nähe von jedem Dosenteil (7) der Steckverbindungen (7 ; 11) eine Gewindebuchse (17) für die an jedem druckfesten Gehäuse angebrachte Schraube (15) sowie ein mit der Schraube zusammenwirkender Endschalter (14) angeordnet ist und daß an der Einspeisevorrichtung (1) eine Einrichtung (8) zur Abstützung der druckfesten Gehäuse (6) beim Ansetzen an den Sammelschienenkanal (1) bzw. bei der Abnahme von demselben vorgesehen ist.

2. Elektrische Schaltanlage nach Anspruch 1, dadurch gekennzeichnet, daß an dem Sammelschienenkanal (1) in der Nähe von jedem Dosenteil (7) eine Schutzklappe (20) gelenkig befestigt ist, die in ihrer Ruhestellung den Dosenteil (7) freigibt und in ihrer Arbeitsstellung den Dosenteil abdeckt und die ferner eine Durchtrittsöffnung für eine in der Arbeitsstellung der Schutzklappe (20) mit der Gewindebuchse (17) und dem Endschalter (14) zusammenwirkende Schraube (21) besitzt.

**Claims**

1. A flame-proof electrical system (2) having a supply device (1) and apparatus accommodated in enclosures (6) of the « flame-proof » type « d » (protected for use in explosive atmospheres) as well as having a flame-proof plug and socket connection (7 ; 11) arranged between each flame-proof enclosure (6) and the supply device (1) and each having a screw (15) to connect and to secure the enclosure (6) to the supply device (1), the screws (15) leading relative to the contact elements of the plug and socket connection (7 ; 11) when the enclosure (6) is being connected to the supply device (1) and lagging when they are being separated, and wherein in addition, the socket parts (7) are arranged on the supply device (1) and the plug parts (11) on the flame-proof enclosures (6), characterised in that the supply device is formed as a bus bar duct (1) having socket parts corresponding in number to the flame-proof enclosures (6) required to make up a switchgear unit, and in that arranged on the supply device, near each socket part (7) of the plug and socket connections (7 ; 11) there is a threaded bush (17) for the screw (15) attached to each flame-proof enclosure and a limit switch (14) cooperating with the screw (15), and in that means (8) is provided on the supply device (1) for supporting the flame-proof enclosure (6) when attaching it to or detaching it from the bus bar duct (1).

2. An electric switchgear unit according to claim 1, characterised in that attached pivotably to the bus bar duct (1) near the socket part (7) is a protective cap (20) which, in its inoperative position, reveals the socket part (7) and in its operating position covers the socket part (7) and which also has an opening for a screw (21) which cooperates with the threaded bush (17) and the limit switch (14) when the protective cap (20) is in the operating position.

**Revendications**

1. Installation électrique (2) sous une forme de réalisation antigrisouteuse, comportant un dispositif d'alimentation (1) et des appareils logés dans des boîtiers (6) correspondant au type de protection « encapsulage résistant à la pression » (Sch)d, ainsi qu'un connecteur antigrisouteux (7 ; 11) disposé entre chaque boîtier (6) résistant à la pression et le dispositif d'alimentation, ainsi que des vis respectives (15) servant à relier et verrouiller les boîtiers (6) au dispositif d'alimentation (1), et dans lequel les vis (15) agissent en avance par rapport aux éléments de contact du connecteur (7 ; 11) lors de l'établissement de la liaison entre les boîtiers (6) et le dispositif d'alimentation (1) et avec retard lors de la séparation des boîtiers du dispositif d'alimentation, et dans lequel, en outre, les éléments formant prise femelle (7) sont situés sur le dispositif d'alimentation (1) et les éléments formant fiche (11) sont disposés sur les boîtiers (6) résistants à la pression, caractérisé par le fait que le dispositif d'alimentation est réalisé sous la forme d'un conduit (1) pour barres omnibus, comportant des parties (7) formant prise femelle, dont le nombre est égal à celui des boîtiers (6) résistants à la pression, qui sont nécessaires pour former une installation de commutation, une douille taraudée (17) prévue pour la vis (15) montée sur chaque boîtier résistant à la pression et un interrupteur de fin de course (4) coopérant avec la vis sont disposés sur le dispositif d'alimentation à proximité de chaque partie (7) formant prise femelle des connecteurs (7 ; 11), et qu'il est prévu, sur le dispositif d'alimentation (1), un dispositif (8) servant à supporter les boîtiers (6) résistants à la pression lors de leur montage sur le conduit (1) pour barres omnibus ou lors de leur retrait à partir de ce conduit.

2. Installation électrique de commutation suivant la revendication 1, caractérisée par le fait qu'au conduit (1) pour barres omnibus se trouve fixé, de façon articulée, à proximité de chaque partie (7) formant prise femelle, un volet de protection (20) qui, dans sa position de repos, dégage la partie (7) formant prise femelle et, dans sa position de travail, ferme la partie formant prise femelle et qui possède en outre une ouverture de passage pour une vis (21) qui, lorsque le volet de protection (20) est dans sa position de travail, coopère avec la douille taraudée (17) et l'interrupteur de fin de course (14).

FIG 1

FIG 2